# EUROPEAN PATENT SPECIFICATION

(11) **EP 1 728 009 B1**
(45) Date of publication and mention of the grant of the patent: **09.07.2008**
(21) Application number: 05729453.0
(22) Date of filing: 22.03.2005
(51) Int. Cl.: F16H 55/14, F16H 57/00, F16D 3/52, F04C 29/00

(54) **Vacuum pump**
Vakuumpumpe
Pompe à vide

(30) Priority: 26.03.2004 GB 0406887
(43) Date of publication of application: 06.12.2006
(73) Proprietor: Edwards Limited, Crawley, West Sussex RH10 9LW (GB)
(72) Inventor: DAVENNE, Tristan Richard Ghislain, Shoreham By Sea, West Sussex BN43 6PB (GB); SMITH, John Cambridge, Steyning, West Sussex, BN44 3JX (GB)
(74) Representative: Clark, Charles Robert
(86) International application number: PCT/GB2005/001087
(87) International publication number: WO 2005/093293

(56) References cited:
- EP-A- 0 344 945
- EP-A- 0 987 471
- BE-A- 488 019
- DE-A1- 2 941 117
- DE-A1- 10 114 079
- DE-C1- 3 403 259
- SU-A1- 1 078 159
- US-A- 86 533
- US-A- 3 991 818
- US-A- 5 259 261
- US-A- 5 692 410
- US-A- 5 787 755
- US-A- 5 893 355
- PATENT ABSTRACTS OF JAPAN vol. 2003, no. 04, 2 April 2003 (2003-04-02) & JP 2002 349672 A (MITSUBISHI MOTORS CORP), 4 December 2002 (2002-12-04)

## Description

The present invention relates to a vacuum pump comprising at least two shafts (1) connected together by a gear assembly for transmitting torque from one shaft to another

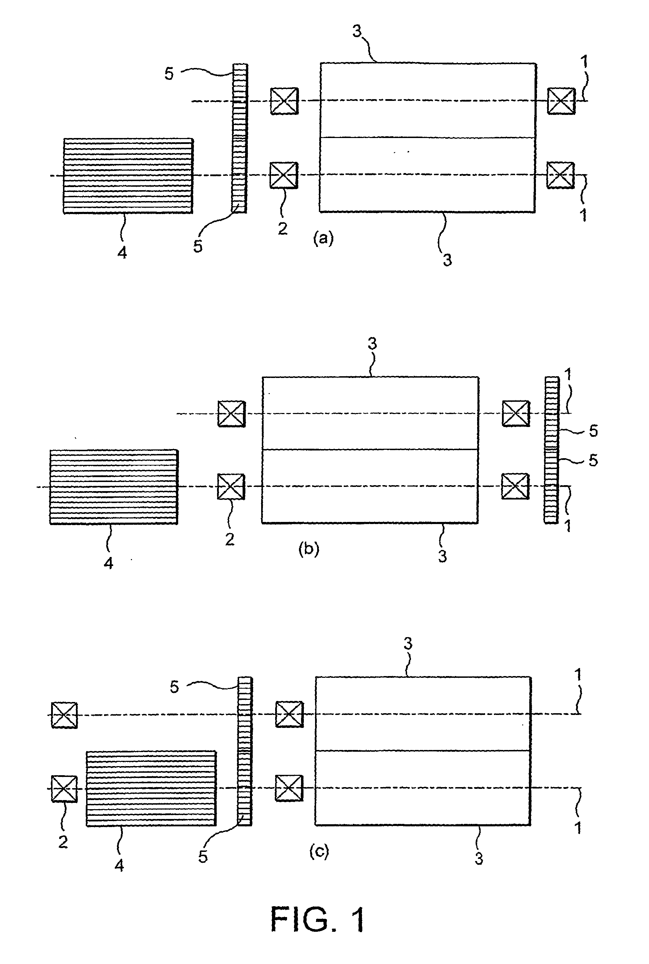

With reference to Figure 1, a known vacuum pump includes a pumping chamber through which pass a pair of parallel shafts 1 supported by bearings 2. A rotor 3 is mounted on each shaft 1 for rotation within the pumping chamber. The rotors 3 have complementary pumping profiles, which may be Roots, Northey (or "claw") or screw. In use, when a motor 4 is driving one of the shafts 1, the other shaft is rotated synchronously with that shaft by means of the meshed timing gears 5. The rotors 3 are so profiled that fluid to be pumped is drawn into an inlet of the pumping chamber and exits from the pumping chamber via an outlet.

Figure 1 illustrates three different pumping configurations. In Figure 1(a), the rotors 3 are mounted between the bearings 2 and the timing gears 5 are provided at the motor-driven end of the pump. In Figure 1(b), the timing gears 5 are provided at the other end of the pump, and Figure 1(c) illustrates a configuration using cantilevered rotors.

Transmission of torque through the meshed gears 5 is affected by gear eccentricity. Gear eccentricity results in an oscillating drive torque, which would normally be constant with concentric gears. In the case of high inertia, lightly loaded, rotating machinery driven by gears with typical manufacturing eccentricity tolerances, the magnitude of the oscillating drive torque can exceed the steady state drive torque. As a result, the gears leave mesh, which can provoke high frequency tooth-to-tooth slapping, a characteristic noise frequently encountered in lightly loaded rotating machinery.

Pump design has been improved to reduce friction and power consumption. Consequently the required steady state drive torque has reduced and thus rotating machinery has become increasingly prone to eccentricity induced torsional vibrations and related noise problems.

It is an aim of at least the preferred embodiment of the present invention to reduce such torsional vibrations and noise by accommodating typical gear eccentricities.

The present invention provides a vacuum pump comprising at least two shafts connected together by a gear assembly for transmitting torque from one shaft to another, the gear assembly comprising two intermeshing gears mounted on respective shafts, one of the gears comprising a hub member for receiving one of the shafts, a toothed annular member mounted for rotation with the hub member, and resilient coupling means provided between the hub member and the annular member having a stiffness capable of reducing torsional vibrations and noise induced during rotation of the gears by the eccentricity of at least one of the gears.

The resilient coupling means is preferably located between opposing surfaces of the members. In the preferred embodiment, the resilient coupling is located within a drive mechanism for transferring torque between the members. For example, one member may comprise one or more recesses each for receiving a detent of the other member for transferring torque between the members, the resilient coupling being located between opposing surfaces of the or each recess and detent.

The means for reducing torsional vibrations and noise thus preferably comprises at least one resilient member located between opposing surfaces of the members. In the preferred embodiment, a plurality of resilient members are each located between respective opposing surfaces of the members.

The resilient members may be conveniently provided by a number of springs, for example, metal torsional springs or translational springs including flat, disc and coil springs acting along a tangential line within the radius of the member. Alternatively, repelling magnets could be used with the resulting stiffness being proportional to the magnetic flux. Finally in some applications use of viscoelastic materials may be appropriate.

Providing means such as a spring between the hub member and the annular member can allow the torsional stiffness of the gear to be controlled. By providing a spring between the members the inertia that is accelerated and decelerated due to eccentricity is reduced. As the gear is accelerated, the spring is designed to compress so that the shaft can remain at a constant speed. This isolation of the shaft from eccentricity-induced gear acceleration reduces the oscillations in drive torque and will increase the eccentricity at which the gears will leave mesh.

In the event of an external torque other than that resulting from gear eccentricity causes the gears to leave mesh, the spring will act to absorb the impact that occurs as the gears come back into mesh and thus act to bring the assembly back to the linear, in-mesh, operating region. In support of this argument, non-linear analysis of tooth-to-tooth slapping has shown that the gears can only leave mesh if the overall torsional stiffness is above a certain level. In other words, low torsional stiffness rotating machinery ('weak shafts') would always remain in mesh.

An example vacuum pump is a high-speed Roots blower vacuum pump which includes Roots profile rotors rotating in a pumping chamber with a 1:1 gear ratio. Torsional vibrations between the gears can be a problem when operating at maximum speed and ultimate pressure (the best vacuum achievable by the pump). The noise generated has been shown to depend on gear eccentricity, and is present with the available manufacturing gear wheel tolerances. An experimental prototype gear according to the invention fitted to the driven shaft has been shown to eliminate gear tooth-to-tooth slapping with gear eccentricities that normally result in a pump prone to this noise problem.

Preferred features of the present invention will now be described, by way of example only, with reference to the accompanying drawings, in which:
Figure 1 illustrates schematically three known pump configurations;
Figure 2 is a cross-section of a gear suitable for use in any of the pumps of Figure 1; and
Figure 3 is a cross-section illustrating the mechanism for transmitting torque between the hub member and annular member of the gear of Figure 2.

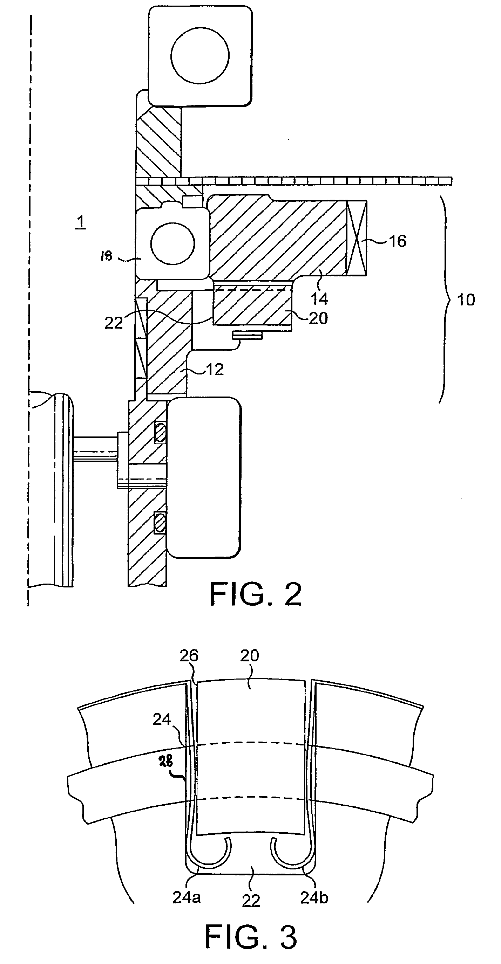

With reference to Figure 2, a gear 10 suitable for use in any of the vacuum pumps shown in Figure 1 or in any other lightly loaded, high inertia rotating machine comprises a hub member 12 for receiving a shaft of the pump and an annular member 14 mounted for rotation with the hub member 12 and having peripheral teeth 16. The shaft received by the hub member 12 may be either a drive shaft or a driven shaft of the pump. A bearing assembly 18 is carried by the bore of the annular member 14 and the shaft.

In use, the peripheral teeth 16 of the annular member 14 are in meshing engagement with the corresponding teeth of another gear having a 1:1 gear ratio with the gear 10, similar to the timing gears 5 shown in Figure 1.

A drive mechanism for transmitting torque between the members 12, 14 is provided by a plurality of detents provided around a surface perpendicular to the rotational axis of one of the members which enter respective recesses provided around the facing axial surface of the other member. In the embodiment shown in Figure 2, detents 20 are provided on the annular member 14 and recesses 22 are provided on the hub member 12, although this could be the other way around, with the detents being provided on the hub member and the recesses provided on the annular member.

As shown in Figure 3, flat springs 24a, 24b are located within each recess 22 between the facing radial surfaces 26, 28 of the detent 20 and recess 22. The springs 24a, 24b have a stiffness chosen to substantially inhibit torsional vibrations and noise induced under lightly loaded conditions by eccentricity of either the annular member 14 or of the gear meshing with the teeth 16 of the annular member 14. The springs 24a, 24b also provide absorption of any tooth-to-tooth impact resulting from external disturbances.

Under lightly loaded conditions, as experienced by a pump operating at ultimate pressure, the transmission of torque between the members 12, 14 is through one of the springs 24a, 24b provided within each recess 22. This provides a degree of resilience necessary to accommodate any gear eccentricity.

In the event of the pump being subject to higher loads where a solid drive is needed to avoid compromising the phase relationship between the driving and driven shafts, the spring flattens between the facing radial surfaces 26, 28 once the angular deflection of the spring has reached a specified value above a predetermined drive torque. This provides the necessary solid drive between the radial faces 26, 28.

Whilst in this embodiment flat springs have been used to control torsional stiffness, tangentially mounted disc springs or coil springs could be used instead. Alternatively, repelling magnets could be used, with the resulting torsional stiffness being proportional to the magnetic flux. In some applications, use of viscoelastic materials may be appropriate.

## Claims

1. A vacuum pump comprising at least two shafts (1) connected together by a gear assembly for transmitting torque from one shaft to another, the gear assembly comprising two intermeshing gears mounted on respective shafts, one of the gears (10) comprising a hub member (12) for receiving one of the shafts, a toothed annular member (14) mounted for rotation with the hub member (12), and resilient coupling means provided between the hub member (12) and the annular member (14) having a stiffness capable of reducing torsional vibrations and noise induced during rotation of the gears by the eccentricity of at least one of the gears.

2. A vacuum pump according to Claim 1, wherein the means for reducing torsional vibrations and noise comprises means for increasing the critical eccentricity of the gear.

3. A vacuum pump according to Claim 1 or Claim 2, wherein the means for reducing torsional vibrations and noise is located between a radial surface (28) of the hub member (12) and an opposing radial surface (26) of the annular member (14).

4. A vacuum pump according to any preceding claim, wherein the means for reducing torsional vibrations and noise is located within a drive mechanism for transferring torque between the hub member (12) and the annular member (14).

5. A vacuum pump according to Claim 4, wherein one of the hub member (12) and the annular member (14) comprises a recess (22) for receiving a detent (20) of the other of the hub member (12) and the annular member (14) for transferring torque between the hub member (12) and the annular member (14), the means for reducing torsional vibrations and noise being located between opposing surfaces (28), (26) of the recess (22) and the detent (20).

6. A vacuum pump according to Claim 5, wherein said one of the hub member (12) and the annular member (14) comprises a plurality of said recesses (22) each for receiving a respective detent (20) of the other of the hub member (12) and the annular member (14), the means for reducing torsional vibrations and noise being located between opposing surfaces (28), (26) of each recess (22) and detent (20).

7. A vacuum pump according to any preceding claim, wherein the means for reducing torsional vibrations and noise comprises at least one resilient member located between opposing surfaces (28), (26) of the hub member (12) and the annular member (14).

8. A vacuum pump according to Claim 7, wherein the means for reducing torsional vibrations and noise comprises a plurality of resilient members each located between respective opposing surfaces (28), (26) of the hub member (12) and the annular member (14).

9. A vacuum pump according to Claim 8, wherein each resilient member comprises a spring (24) for providing torsional resistance.

10. A vacuum pump according to Claim 8, wherein each resilient member comprises a plurality of springs (24) for providing torsional resistance.

11. A vacuum pump according to Claim 8, wherein each resilient member comprises a viscoelastic member.

12. A vacuum pump according to any of Claims 1 to 6, wherein the means for reducing torsional vibrations and noise comprises mutually repelling magnets provided on opposing surfaces of the hub member (12) and the annular member (14).

13. A vacuum pump according to any preceding claim, wherein the means for reducing torsional vibrations and noise is arranged to maintain the phase relationship between the shafts (1).

14. A vacuum pump according to Claim 13, wherein the means for reducing torsional vibrations and noise is arranged to permit a solid drive to be established between the hub member (12) and the annular member (14) above a predetermined drive torque.

## Patentansprüche

1. Vakuumpumpe mit mindestens zwei Wellen (1), die über ein Getriebe miteinander verbunden sind, um Drehmoment von einer Welle zur anderen zu übertragen, wobei das Getriebe (2) miteinander in Eingriff stehende, auf den jeweiligen Wellen montierte Zahnräder aufweist, von denen eines (10) der Zahnräder ein Nabenteil (12) zur Aufnahme einer der Wellen, ein verzahntes ringförmiges Teil (14), das mit dem Nabenteil (12) zusammendrehbar montiert ist, und elastische Kupplungsmittel zwischen dem Nabenteil (12) und dem ringförmigen Teil (14) mit einer Steifigkeit aufweist, die zum Reduzieren von Drehschwingungen und während der Drehung der Zahnräder durch Exzentrizität mindestens eines der Zahnräder induziertem Geräusch in der Lage ist.

2. Vakuumpumpe nach Anspruch 1, wobei die Mittel zum Reduzieren von Drehschwingungen und Geräusch Mittel zum Erhöhen der kritischen Exzentrizität des Zahnrads umfassen.

3. Vakuumpumpe nach Anspruch 1 oder Anspruch 2, wobei die Mittel zum Reduzieren von Drehschwingungen und Geräusch zwischen einer Radialfläche (28) des Nabenteils (12) und einer entgegengesetzten Radialfläche (26) des ringförmigen Teils (14) angeordnet sind.

4. Vakuumpumpe nach einem der vorhergehenden Ansprüche, wobei die Mittel zum Reduzieren von Drehschwingungen und Geräusch innerhalb eines Antriebsmechanismus zum Übertragen von Drehmoment zwischen dem Nabenteil (12) und dem ringförmigen Teil (14) angeordnet sind.

5. Vakuumpumpe nach Anspruch 4, wobei eines von Nabenteil (12) und ringförmigem Teil (14) eine Aussparung (22) zur Aufnahme eines Ansatzes (20) des anderen Teils von Nabenteil (12) und ringförmigem Teil (14) zum Übertragen von Drehmoment zwischen dem Nabenteil (12) und dem ringförmigen Teil (14) aufweist, wobei die Mittel zum Reduzieren von Drehschwingungen und Geräusch zwischen gegenüberliegenden Flächen (28, 26) der Ausnehmung (22) und des Ansatzes (20) angeordnet sind.

6. Vakuumpumpe nach Anspruch 5, wobei eines von Nabenteil (12) und ringförmigem Teil (14) eine Mehrzahl von den genannten Aussparungen (22) jeweils zur Aufnahme eines entsprechenden Ansatzes (20) des anderen Teils von Nabenteil (12) und ringförmigem Teil (14) aufweist, wobei die Mittel zum Reduzieren von Drehschwingungen und Geräusch zwischen gegenüberliegenden Flächen (28, 26) jeder Aussparung (22) und jedes Ansatzes (20) angeordnet sind.

7. Vakuumpumpe nach einem der vorhergehenden Ansprüche, wobei die Mittel zum Reduzieren von Drehschwingungen und Geräusch mindestens ein elastisches Bauteil umfassen, das zwischen gegenüberliegenden Flächen (28, 26) des Nabenteils (12) und des ringförmigen Teils (14) angeordnet ist.

8. Vakuumpumpe nach Anspruch 7, wobei die Mittel zum Reduzieren von Drehschwingungen und Geräusch eine Mehrzahl elastischer Bauteile umfassen, die jeweils zwischen entsprechenden gegenüberliegenden Flächen (28, 26) des Nabenteils (12) und den ringförmigen Teils (14) angeordnet sind.

9. Vakuumpumpe nach Anspruch 8, wobei jedes elastische Bauteil eine Feder (24) zum Herstellen eines Torsionswiderstands enthält.

10. Vakuumpumpe nach Anspruch 8, wobei jedes elastische Bauteil eine Mehrzahl von Federn (24) zum Herstellen von Torsionswiderstand umfasst.

11. Vakuumpumpe nach Anspruch 8, wobei jedes elastische Bauteil ein viskoelastisches Bauteil umfasst.

12. Vakuumpumpe nach einem der Ansprüche 1 bis 6, wobei die Mittel zum Reduzieren von Drehschwingungen und Geräusch sich gegenseitig abstoßende Magnete umfassen, die an einander gegenüberliegenden Flächen des Nabenteils (12) und den ringförmigen Teils (14) vorgesehen sind.

13. Vakuumpumpe nach einem der vorhergehenden Ansprüche, wobei die Mittel zum Reduzieren von Drehschwingungen und Geräusch zum Aufrechterhalten der Phasenbeziehung zwischen den Wellen (1) ausgelegt sind.

14. Vakuumpumpe nach Anspruch 13, wobei die Mittel zum Reduzieren von Drehschwingungen und Geräusch für das Zulassen des Herstellens eines starren Antriebs zwischen dem Nabenteil (12) und dem ringförmigen Teil (14) oberhalb eines vorgegebenen Antriebsdrehmoments ausgelegt sind.

## Revendications

1. Pompe à vide comprenant au moins deux arbres (1) reliés l'un à l'autre par un train d'engrenages pour transmettre un couple de torsion d'un arbre à l'autre, le train d'engrenages comprenant deux engrenages s'engrenant montés sur des arbres respectifs, l'un des engrenages (10) comprenant un élément de moyeu (12) destiné à recevoir l'un des arbres, un élément annulaire denté (14) monté pour rotation avec l'élément de moyeu (12), et des moyens d'accouplement élastiques prévus entre l'élément de moyeu (12) et l'élément annulaire (14) ayant une rigidité capable de réduire les vibrations de torsion et le bruit induits pendant la rotation des engrenages par l'excentricité d'au moins l'un des engrenages.

2. Pompe à vide selon la revendication 1, dans laquelle les moyens pour réduire les vibrations de torsion et le bruit comprennent des moyens pour augmenter l'excentricité critique de l'engrenage.

3. Pompe à vide selon la revendication 1 ou 2, dans laquelle les moyens pour réduire les vibrations de torsion et le bruit sont situés entre une surface radiale (28) de l'élément de moyeu (12) et une surface radiale opposée (26) de l'élément annulaire (14).

4. Pompe à vide selon l'une quelconque des revendications précédentes, dans laquelle les moyens pour réduire les vibrations de torsion et le bruit sont situés dans un mécanisme d'entraînement pour transférer le couple de torsion entre l'élément de moyeu (12) et l'élément annulaire (14).

5. Pompe à vide selon la revendication 4, dans laquelle l'un d'entre l'élément de moyeu (12) et l'élément annulaire (14) comprend un évidement (22) destiné à recevoir un cliquet (20) de l'autre d'entre l'élément de moyeu (12) et l'élément annulaire (14) pour transférer le couple de torsion entre l'élément de moyeu (12) et l'élément annulaire (14), les moyens pour réduire les vibrations de torsion et le bruit étant situés entre des surfaces opposées (28, 26) de l'évidement (22) et du cliquet (20).

6. Pompe à vide selon la revendication 5, dans laquelle ledit un d'entre l'élément de moyeu (12) et l'élément annulaire (14) comprend une pluralité desdits évidements (22) chacun destiné à recevoir un cliquet respectif (20) de l'autre d'entre l'élément de moyeu (12) et l'élément annulaire (14), les moyens pour réduire les vibrations de torsion et le bruit étant situés entre des surfaces opposées (28, 26) de chaque évidement (22) et cliquet (20).

7. Pompe à vide selon l'une quelconque des revendications précédentes, dans laquelle les moyens pour réduire les vibrations de torsion et le bruit comprennent au moins un élément élastique situé entre des surfaces opposées (28, 26) de l'élément de moyeu (12) et de l'élément annulaire (14).

8. Pompe à vide selon la revendication 7, dans laquelle les moyens pour réduire les vibrations de torsion et le bruit comprennent une pluralité d'éléments élastiques situés chacun entre des surfaces opposées (28, 26) de l'élément de moyeu (12) et de l'élément annulaire (14).

9. Pompe à vide selon la revendication 8, dans laquelle chaque élément élastique comprend un ressort (24) destiné à offrir une résistance à la torsion.

10. Pompe à vide selon la revendication 8, dans laquelle chaque élément élastique comprend une pluralité de ressorts (24) destinés à offrir une résistance à la torsion.

11. Pompe à vide selon la revendication 8, dans laquelle chaque élément élastique comprend un élément viscoélastique.

12. Pompe à vide selon l'une quelconque des revendications 1 à 6, dans laquelle les moyens pour réduire les vibrations de torsion et le bruit comprennent des aimants se repoussant, prévus sur des surfaces opposées de l'élément de moyeu (12) et de l'élément annulaire (14).

13. Pompe à vide selon l'une quelconque des revendications précédentes, dans laquelle les moyens pour réduire les vibrations de torsion et le bruit sont agencés de manière à maintenir une relation de phase entre les arbres (1).

14. Pompe à vide selon la revendication 13, dans laquelle les moyens pour réduire les vibrations de torsion et le bruit sont agencés de manière à permettre d'établir un entraînement stable entre l'élément de moyeu (12) et l'élément annulaire (14) au-dessus d'un couple d'entraînement prédéterminé.
